# EUROPÄISCHE PATENTSCHRIFT

(11) **EP 1 388 694 B1**
(45) Veröffentlichungstag und Bekanntmachung des Hinweises auf die Patenterteilung: **11.01.2006**
(21) Anmeldenummer: 03015408.2
(22) Anmeldetag: 09.07.2003
(51) Int. Cl.: F16J 15/32, F16J 15/00

(54) **Dichtungsanordnung**
Sealing arrangement
Dispositif d'étanchéité

(30) Priorität: 10.08.2002 DE 10236831
(43) Veröffentlichungstag der Anmeldung: 11.02.2004
(73) Patentinhaber: Carl Freudenberg KG, 69469 Weinheim (DE)
(72) Erfinder: Steinert, Klaus-Albrecht, 64668 Rimbach (DE); Jäck, Thomas, 64658 Fürth (DE); Fading, Karl, 69514 Laudenbach (DE)

(56) Entgegenhaltungen:
- WO-A-01/11275
- US-A- 4 053 166
- US-A- 5 727 794

## Beschreibung

Die Erfindung betrifft eine Dichtungsanordnung, umfassend einen ersten und einen zweiten Dichtring, die einander axial benachbart zugeordnet und verliersicher miteinander verbunden sind, wobei zumindest der erste Dichtring selbsttragend, d.h. stützkörperlos ausgebildet ist und aus polymerem Werkstoff besteht, wobei beide Dichtringe auf den einander zugewandten Seiten jeweils eine Verbindungseinrichtung aufweisen und wobei die Verbindungseinrichtung des ersten Dichtrings einstückig und materialeinheitlich mit diesem ausgebildet ist, wobei der erste und der zweite Dichtring jeweils zumindest eine im Betrieb dynamisch beanspruchte Dichtlippe aufweisen, wobei die Dichtlippen mit axialem Abstand zueinander benachbart angeordnet sind und wobei die Dichtlippen mit radialer Vorspannung dichtend an die Oberfläche eines abzudichtenden Maschinenelements anlegbar sind und in axialer Richtung einen Hohlraum begrenzen.

### Stand der Technik

Eine solche Dichtungsanordnung ist aus der US 4,053,166 bekannt. Die vorbekannte Dichtungsanordnung ist zur Abdichtung translatorisch hin- und herbewegbarer Maschinenelemente vorgesehen, wobei die Dichtringe in einer funktionstechnischen Reihenschaltung angeordnet sind. Die beiden Dichtringe umschließen mit jeweils einer dynamisch beanspruchten Dichtlippe die abzudichtende Oberfläche einer hin- und hergehenden Stange, wobei der dem abzudichtenden Raum axial zugewandte Dichtring vergleichsweise weicher ist und aus einem elastomeren Werkstoff besteht. Auf der dem abzudichtenden Raum axial abgewandten Seite des ersten Dichtrings ist der zweite, vergleichsweise härtere Dichtring angeordnet, der beispielsweise aus PTFE besteht.
Die Verbindungseinrichtung der beiden Dichtringe ist jeweils einstückig und materialeinheitlich mit dem jeweiligen Dichtring ausgebildet, wobei einer der Dichtringe einen Vorsprung und der andere Dichtring eine kongruent gestaltete Ausnehmung aufweist und wobei der Vorsprung und die Ausnehmung formschlüssig miteinander verbunden sind. Die Dichtlippe des vergleichsweise härteren Dichtrings ist als Stützkörper für die Dichtlippe des vergleichsweise weicheren Dichtrings ausgeführt, so dass die Dichtlippe des weicheren Dichtrings auch bei vergleichsweise großer Druckbeaufschlagung funktioniert. Auch bei großer Druckbeaufschlagung der Dichtungsanordnung wird die Reibung nicht unerwünscht hoch, da der vergleichsweise härtere Dichtring, der als Stützring für den weicheren Dichtring ausgebildet ist, aus PTFE besteht.

Aus der US 5,727,794 ist eine weitere Dichtungsanordnung bekannt, umfassend zwei Dichtringe, die als Gleichteile ausgebildet und miteinander verbunden sind. Die montierten Dichtringe sind durch Abstandshalter axial einander benachbart zugeordnet und weisen axial entgegengesetzt vorstehende Dichtlippen auf. Die beiden Dichtringe der Dichtungsanordnung sind vorgesehen, axial zueinander benachbart angeordnete, abzudichtende Räume voneinander zu trennen, wobei die Dichtlippen der Dichtringe, im Schnitt betrachtet, einen kreisringförmigen Hohlraum begrenzen, der entlang seines gesamten Außenumfangs mit der Umgebung verbunden ist. Leckage, die aus den abzudichtenden Räumen in den Hohlraum axial zwischen den Dichtlippen entweicht, kann durch einen Kanal zwischen den Dichtringen an die Umgebung abgeführt werden.
Die axiale Weite der Verbindung, die den Hohlraum mit der Umgebung verbindet, ist weitgehend abhängig von der Montage der Dichtungsanordnung; abhängig von der Sorgfältigkeit, mit der die Montage vorgenommen wird, differieren die geometrischen Abmessungen der Verbindung. Die Verbindung wird axial durch die beiden Rückenan-Rücken montierten Dichtringe begrenzt.

Eine weitere Dichtungsanordnungen ist aus der DE 36 19 309 C1 bekannt. Die vorbekannte Dichtungsanordnung gelangt als Kühlwasserpumpendichtung zur Anwendung und umfasst eine Hauptdichtung, der kühlwasserseitig eine Schutzdichtung vorgeschaltet ist. Die Schutzdichtung besteht aus einem Filtervlies und ist außenseitig in einem Stützkörper aus Kunststoff gehalten. Dieser Stützkörper der Schutzdichtung ist durch eine Steckverbindung an einem Stützkörper der Hauptdichtung festgelegt.

### Darstellung der Erfindung

Der Erfindung liegt die Aufgabe zugrunde, eine Dichtungsanordnung der eingangs genannten Art derart weiterzuentwickeln, dass diese einen einfachen und teilearmen Aufbau hat und deshalb in fertigungstechnischer und wirtschaftlicher Hinsicht einfach und kostengünstig herstellbar ist und dass Leckage aus diesem Bereich sicher an die Umgebung abgeführt und ein unerwünschter Druckaufbau axial zwischen den Dichtlippen vermieden wird.

Diese Aufgabe wird erfindungsgemäß mit den Merkmalen von Anspruch 1 gelöst. Auf vorteilhafte Ausgestaltungen nehmen die Unteransprüche Bezug.

Zur Lösung der Aufgabe ist eine Dichtungsanordnung vorgesehen, umfassend einen ersten und einen zweiten Dichtring, die einander axial benachbart zugeordnet und verliersicher miteinander verbunden sind, wobei zumindest der erste Dichtring selbsttragend, d.h. stützkörperlos ausgebildet ist und aus polymerem Werkstoff besteht, wobei beide Dichtringe auf den einander zugewandten Seiten jeweils eine Verbindungseinrichtung aufweisen und wobei die Verbindungseinrichtung des ersten Dichtrings einstückig und materialeinheitlich mit diesem ausgebildet ist, wobei der erste und der zweite Dichtring jeweils zumindest eine im Betrieb dynamisch beanspruchte Dichtlippe aufweisen, wobei die Dichtlippen mit axialem Abstand zueinander benachbart angeordnet sind und wobei die Dichtlippen mit radialer Vorspannung dichtend an die Oberfläche eines abzudichtenden Maschinenelements anlegbar sind und in axialer Richtung einen Hohlraum begrenzen und wobei zumindest einer der Dichtringe im Bereich axial zwischen den Dichtlippen zumindest eine Ausnehmung, die einen Bestandteil der Verbindungseinrichtung bildet, aufweist, die den Hohlraum zur Abführung von Leckage mit der Umgebung verbindet.

Der stützkörperlose erste Dichtring ist einstückig und materialeinheitlich ausgebildet und besteht beispielsweise aus einem PTFE-Compound. Der Werkstoff ist derart ausgewählt, dass er einerseits eine gute Abdichtung des abzudichtenden Raums gegenüber der Umgebung ermöglicht und andererseits eine haltbare Verbindungseinrichtung, die mit der Verbindungseinrichtung des zweiten Dichtrings zusammenwirkt. Der einstückige, materialeinheitliche erste Dichtring ist außerdem bezüglich eines einfachen, sortenreinen Recyclings von hervorzuhebendem Vorteil. Einer Trennung unterschiedlicher Materialien vor dem Recycling, die beispielsweise bei Dichtringen mit einem Stützkörper aus einem metallischen Werkstoff durchgeführt werden muß, bedarf es dabei nicht.

Der erste und der zweite Dichtring weisen jeweils zumindest eine dynamisch beanspruchte Dichtlippe auf, wobei die Dichtlippen mit axialem Abstand zueinander benachbart angeordnet sind und wobei die Dichtlippen mit radialer Vorspannung dichtend an die Oberfläche eines abzudichtenden Maschinenelements anlegbar sind und in axialer Richtung einen Hohlraum begrenzen. Eine solche Anordnung hat sich insbesondere dann bewährt, wenn die Dichtungsanordnung zur Trennung von schwer- bzw. unverträglichen Medien zur Anwendung gelangt, wobei die Medien beispielsweise eine unterschiedliche Schmiercharakteristik aufweisen. Die Dichtungsanordnung kann beispielsweise in Tandempumpen zur Anwendung gelangen.

Zumindest einer der Dichtringe weist im Bereich axial zwischen den Dichtlippen zumindest eine Ausnehmung auf, die den Hohlraum zur Abführung von Leckage mit der Umgebung verbindet. Dadurch ist sichergestellt, dass betriebsbedingt auftretende Leckage innerhalb des Hohlraums nicht zu einem unerwünschten Druckaufbau zwischen den Dichtlippen führt und dadurch zu unerwünscht negativen Gebrauchseigenschaften über einen längeren Zeitraum. Bei der erfindungsgemäßen Dichtungsanordnung wird die Leckage aus dem Hohlraum in die Umgebung abgeführt und zeigt dadurch an, dass zumindest einer der Dichtringe verschlissen/beschädigt ist und deshalb ausgetauscht werden muss. Die in die Umgebung abgeführte Leckage ist demnach ein Indikator für die Funktionsfähigkeit/den Zustand der Dichtungsanordnung.

Nach einer ersten Ausgestaltung kann es vorgesehen sein, dass der zweite Dichtring vollständig aus elastomerem Werkstoff besteht und dass die Verbindungseinrichtung des zweiten Dichtrings einstückig und materialeinheitlich mit diesem ausgebildet ist. In dieser Ausgestaltung ist auch der zweite Dichtring selbsttragend, d.h. stützkörperlos ausgebildet. Eine solche Dichtungsanordnung mit zwei Dichtringen besteht dann insgesamt aus nur zwei voneinander abweichenden Werkstoffen, nämlich einem polymeren Werkstoff, aus dem der erste Dichtring besteht und einem elastomeren Werkstoff, aus dem der zweite Dichtring besteht.

Für manche Anwendungsfälle ist es vorteilhaft, wenn der zweite Dichtring einen Stützkörper aus zähhartem Werkstoff umfasst, der zumindest teilweise von einem Mantel aus elastomerem Werkstoff umschlossen ist, wobei die Verbindungseinrichtung des zweiten Dichtrings einstückig und materialeinheitlich mit dem Mantel ausgebildet ist. Der Stützring kann dabei beispielsweise aus einem polymeren Werkstoff bestehen oder aus einem tiefgezogenen Blech. Ein zweiter Dichtring mit Stützkörper ist insbesondere dann sinnvoll, wenn der zweite Dichtring in eine Bohrung eines Gehäuses eingepresst ist und die Bohrung des Gehäuses gegenüber der Umgebung statisch abdichten soll. Am Stützkörper kann eine dynamisch beanspruchte Dichtlippe angeformt sein, die aus elastomerem Werkstoff besteht und eiristückig und materialeinheitlich mit dem Mantel ausgebildet ist. Die Dichtlippe kann beispielsweise durch eine Ringwendelfeder an die Oberfläche des abzudichtenden Maschinenelements angepresst sein.

Die Verbindungseinrichtung eines der Dichtringe kann durch zumindest einen rastnockenförmigen Vorsprung gebildet sein und die Verbindungseinrichtung des anderen Dichtrings durch eine hinterschnittene Ausnehmung, wobei der Vorsprung und die Ausnehmung ineinander einschnappbar sind. Solche rastnockenförmigen Verbindungseinrichtungen sind einfach herstell- und montierbar. Montagefehler bei der Verbindung der beiden Dichtringe sind dadurch auf ein Minimum begrenzt.

Durch die rastnockenförmige Verbindung der beiden Dichtringe miteinander, sind diese auf einfache Weise zerstörungsfrei lösbar miteinander verbunden. Dies ist insofern von Vorteil, als die Dichtringe, abhängig vom jeweiligen Verschleiß, jeweils separat austauschbar sind. So besteht beispielsweise die Möglichkeit, den aus einem elastomeren Werkstoff bestehenden zweiten Dichtring wegen seines vergleichsweise höheren Verschleißes bei unerwünscht hoher Leckage auszutauschen und den vergleichsweise verschleißfesteren ersten Dichtring zusammen mit dem neuen, ausgetauschten zweiten Dichtring weiter zu verwenden.

Generell können der erste Dichtring und der zweite Dichtring durch die Verbindungseinrichtungen kraft- und/oder formschlüssig miteinander verbunden sein.

Der erste und der zweite Dichtring bilden bevorzugt eine vormontierbare Einheit, so dass Montagefehler bei der Montage der Dichtungsanordnung in ihren Einbauraum auf ein Minimum begrenzt sind.

Beispielsweise für einen solchen Anwendungsfall können die Dichtlippen der Dichtringe jeweils in axialer Richtung entgegen dem benachbarten Dichtring, axial in Richtung des jeweils abzudichtenden Raums vorgewölbt sein.

Der erste Dichtring kann auf der seiner Dichtlippe radial abgewandten Seite eine radial offene Nut zur Aufnahme einer separat erzeugten, statisch beanspruchten Dichtung aufweisen. Wird beispielsweise durch die Dichtungsanordnung eine Welle abgedichtet, umschließen die dynamisch beanspruchten Dichtlippen die Oberfläche der abzudichtenden Welle unter elastischer Vorspannung dichtend. Die Nut ist in einem solchen Fall radial nach außen offen, wobei in der Nut beispielsweise ein O-Ring angeordnet ist, der ein die Dichtungsanordnung außenumfangsseitig umschließendes Gehäuse statisch gegenüber der Umgebung abdichtet.

Der erste Dichtring besteht im Wesentlichen aus PTFE. PTFE ist gegen die meisten abzudichtenden Medien resistent. Auch während einer außerordentlich langen Gebrauchsdauer unterliegt ein Dichtring aus einem solchen Werkstoff nur einem vernachlässigbar geringen, abrasiven Verschleiß, so dass die Dichtungsanordnung gleichbleibend gute Gebrauchseigenschaften während einer langen Gebrauchsdauer aufweist.

### Kurzbeschreibung der Zeichnung

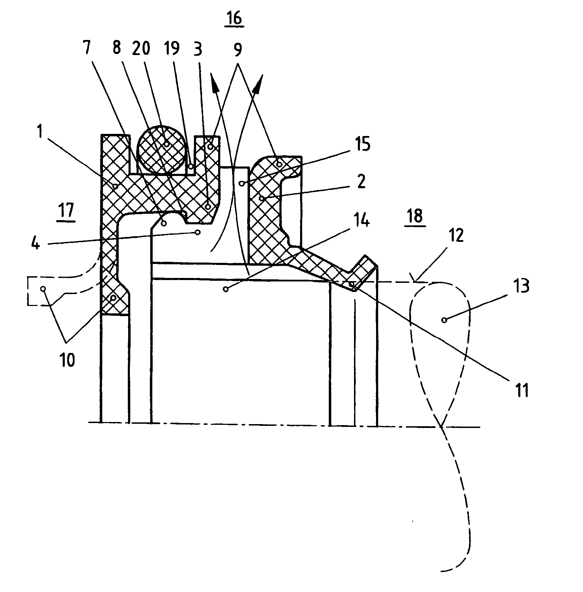

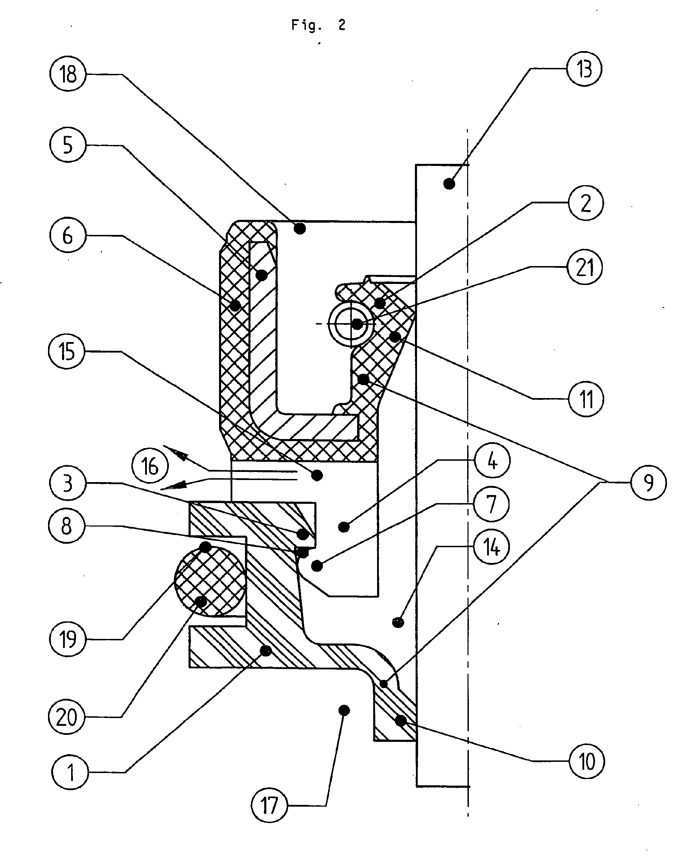

Zwei Ausführungsbeispiele der erfindungsgemäßen Dichtungsanordnung werden nachfolgend anhand der Figuren 1 und 2 näher erläutert.

Diese zeigen jeweils in schematischer Darstellung:
- Figur 1: ein erstes Ausführungsbeispiel,
- Figur 2: ein zweites Ausführungsbeispiel der erfindungsgemäßen Dichtungsanordnung.

### Ausführung der Erfindung

In den Figuren 1 und 2 ist jeweils eine Dichtungsanordnung gezeigt, die aus einem ersten 1 und einem zweiten Dichtring 2 besteht. Die Dichtungsanordnung mit den beiden Dichtringen 1, 2 ist zur Verwendung in einer Tandempumpe vorgesehen und dichtet schwer- bzw. unverträgliche Medien gegeneinander ab. Dazu sind die beiden Dichtringe 1, 2 einander axial benachbart zugeordnet und weisen jeweils eine dynamisch beanspruchte Dichtlippe 10, 11 auf, wobei die Dichtlippen 10, 11 einander mit axialem Abstand benachbart zugeordnet sind.

Die Dichtungsanordnungen sind jeweils im herstellungsbedingten, nichteingebauten Zustand gezeigt.

Ein abzudichtendes Maschinenelement 13 ist gestrichelt dargestellt, ebenso wie die montagebedingte Form der Dichtlippe 10 des ersten Dichtrings 1.

Während der bestimmungsgemäßen Verwendung der Dichtungsanordnung umschließen die Dichtlippen 10, 11 die Oberfläche 12 des abzudichtenden Maschinenelements 13 unter elastischer Vorspannung anliegend und begrenzen in axialer Richtung einen Hohlraum 14. Die Dichtlippen 10, 11 sind axial in Richtung des jeweils abzudichtenden Raums 17, 18 vorgewölbt.

Zur Abführung von Leckage aus dem Hohlraum 14 in die Umgebung 16 weist in diesem Ausführungsbeispiel der zweite Dichtring 2 zumindest eine Ausnehmung 15 auf, die an der tiefsten Stelle der Dichtungsanordnung angeordnet ist. Aus den abzudichtenden Räumen 1.7, 18 austretende Leckage gelangt durch die Ausnehmung 15 in die Umgebung 16 und zeigt dadurch an, dass zumindest einer der Dichtringe 1, 2 ausgetauscht werden muss. Die Ausnehmung 15 kann alternativ auch im ersten Dichtring 1 angeordnet sein. Als weitere Ausgestaltung kann die Ausnehmung 15 zwei Teilbereiche umfassen, von denen einer einen Bestandteil des ersten Dichtrings 1 und der andere einen Bestandteil des zweiten Dichtrings 2 bildet.

Von hervorzuhebendem Vorteil ist, dass die Ausnehmung 15 bevorzugt einen Bestandteil der Verbindungseinrichtungen 3, 4, in den hier gezeigten Ausführungsbeispielen einen Bestandteil der Verbindungseinrichtung 4 des zweiten Dichtrings 2 bildet. Auch durch die zusätzliche Funktion der Verbindungseinrichtung 4 als Ausnehmung 15 zur Abführung von Leckage aus dem Hohlraum 14 in die Umgebung 16, weisen die hier gezeigten Dichtungsanordnungen einen einfachen und teilearmen Aufbau auf.

In den hier gezeigten Ausführungsbeispielen besteht der erste Dichtring 1 aus einem PTFE-Compound und ist selbsttragend, d.h. stützkörperlos ausgebildet. Die Verbindungseinrichtung 3 des ersten Dichtrings 1 ist einstückig und materialeinheitlich mit diesem ausgebildet.

In Figur 1 ist ein erstes Ausführungsbeispiel der Dichtungsanordnung gezeigt. Der zweite Dichtring 2 besteht vollständig aus elastomerem Werkstoff.

Demgegenüber ist im Ausführungsbeispiel aus Figur 2 ein zweiter Dichtring 2 gezeigt, der einen Stützkörper 5 aus Blech umfasst, der von dem Mantel 6 aus elastomerem Werkstoff umschlossen ist. Die Dichtlippe 11 des zweiten Dichtrings 2 wird durch die Ringwendelfeder 21, die aus Federstahl besteht, an die Oberfläche 12 des abzudichtenden Maschinenelements 13 angepresst.

Sowohl im Ausführungsbeispiel gemäß Figur 1 als auch im Ausführungsbeispiel gemäß Figur 2 ist die mit der Ausnehmung 15 versehene Verbindungseinrichtung 4 mit einem umfangsseitig umlaufenden, rastnockenförmigen Vorsprung 7 versehen, der in die ringförmige, hinterschnittene Ausnehmung 8 des ersten Dichtrings 1 eingeschnappt ist. Der erste und der zweite Dichtring 2 sind zerstörungsfrei lösbar miteinander verbunden und dadurch bedarfsweise separat austauschbar.

## Patentansprüche

1. Dichtungsanordnung, umfassend einen ersten (1) und einen zweiten Dichtring (2), die einander axial benachbart zugeordnet und verliersicher miteinander verbunden sind, wobei zumindest der erste Dichtring (1) selbsttragend, d.h. stützkörperlos ausgebildet ist und aus polymerem Werkstoff besteht, wobei beide Dichtringe (1, 2) auf den einander zugewandten Seiten jeweils eine Verbindungseinrichtung (3, 4) aufweisen und wobei die Verbindungseinrichtung (3) des ersten Dichtrings (1) einstückig und materialeinheitlich mit diesem ausgebildet ist, wobei der erste (1) und der zweite Dichtring (2) jeweils zumindest eine im Betrieb dynamisch beanspruchte Dichtlippe (10, 11) aufweisen, wobei die Dichtlippen (10, 11) mit axialem Abstand zueinander benachbart angeordnet sind und wobei die Dichtlippen (10, 11) mit radialer Vorspannung dichtend an die Oberfläche (12) eines abzudichtenden Maschinenelements (13) anlegbar sind und in axialer Richtung einen Hohlraum (14) begrenzen, **dadurch gekennzeichnet, dass** zumindest einer der Dichtringe (2) im Bereich axial zwischen den Dichtlippen (10, 11) zumindest eine Ausnehmung (15), die einen Bestandteil der Verbindungseinrichtung (4) bildet, aufweist, die den Hohlraum (14) zur Abführung von Leckage mit der Umgebung (16) verbindet.

2. Dichtungsanordnung nach Anspruch 1, **dadurch gekennzeichnet, dass** der zweite Dichtring (2) vollständig aus elastomerem Werkstoff besteht und dass die Verbindungseinrichtung (4) des zweiten Dichtrings (2) einstückig und materialeinheitlich mit diesem ausgebildet ist.

3. Dichtungsanordnung nach Anspruch 1, **dadurch gekennzeichnet, dass** der zweite Dichtring (2) einen Stützkörper (5) aus zähhartem Werkstoff umfasst, der zumindest teilweise von einem Mantel (6) aus elastomerem Werkstoff umschlossen ist und dass die Verbindungseinrichtung (4) des zweiten Dichtrings (2) einstückig und materialeinheitlich mit dem Mantel (6) ausgebildet ist.

4. Dichtungsanordnung nach einem der Ansprüche 1 bis 3, **dadurch gekennzeichnet, dass** die Verbindungseinrichtung (4) eines der Dichtringe (2) durch zumindest einen rastnockenförmigen Vorsprung (7) gebildet ist und die Verbindungseinrichtung (3) des anderen Dichtrings (1) durch eine hinterschnittene Ausnehmung (8) und dass der Vorsprung (7) und die Ausnehmung (8) ineinander einschnappbar sind.

5. Dichtungsanordnung nach einem der Ansprüche 1 bis 4, **dadurch gekennzeichnet, dass** der erste (1) und der zweite Dichtring (2) zerstörungsfrei lösbar miteinander verbunden sind.

6. Dichtungsanordnung nach einem der Ansprüche 1 bis 5, **dadurch gekennzeichnet, dass** der erste Dichtring (1) und der zweite Dichtring (2) durch die Verbindungseinrichtungen (3, 4) kraft- und/oder formschlüssig miteinander verbunden sind.

7. Dichtungsanordnung nach einem der Ansprüche 1 bis 6, **dadurch gekennzeichnet, dass** der erste (1) und der zweite Dichtring (2) eine vormontierbare Einheit (9) bilden.

8. Dichtungsanordnung nach einem der Ansprüche 1 bis 7, **dadurch gekennzeichnet, dass** die Dichtlippen (10, 11) der Dichtringe (1, 2) jeweils in axialer Richtung entgegen dem benachbarten Dichtring (2, 1), axial in Richtung des jeweils abzudichtenden Raums (17, 18) vorgewölbt sind.

9. Dichtungsanordnung nach einem der Ansprüche 1 bis 8, **dadurch gekennzeichnet, dass** der erste Dichtring (1) auf der seiner Dichtlippe (10) radial abgewandten Seite eine radial offene Nut (19) zur Aufnahme einer separat erzeugten, statisch beanspruchten Dichtung (20) aufweist.

10. Dichtungsanordnung nach einem der Ansprüche 1 bis 9, **dadurch gekennzeichnet, dass** der erste Dichtring (1) im Wesentlichen aus PTFE besteht.

## Claims

1. Sealing arrangement, comprising a first sealing ring (1) and a second sealing ring (2), which are axially adjacent to each other and captively connected to each other, at least the first sealing ring (1) being formed in a self-supporting manner, i.e. without a supporting body, and consisting of polymeric material, both sealing rings (1, 2) respectively having a connecting device (3, 4) on the mutually facing sides, and the connecting device (3) of the first sealing ring (1) being formed in one piece with it and of the same material, the first sealing ring (1) and the second sealing ring (2) respectively having at least one sealing lip (10, 11) that is under dynamic loading during operation, the sealing lips (10, 11) being arranged adjacent to each other with an axial spacing and the sealing lips (10, 11) being able to be placed with radial prestress in a sealing manner against the surface (12) of a machine element (13) to be sealed off and bounding a cavity (14) in the axial direction, **characterized in that** at least one of the sealing rings (2) has in the region axially between the sealing lips (10, 11) at least one recess (15), which forms a component part of the connecting device (4), which connects the cavity (14) to the surroundings (16) for the discharge of leakage.

2. Sealing arrangement according to Claim 1, **characterized in that** the second sealing ring (2) consists completely of elastomeric material and **in that** the connecting device (4) of the second sealing ring (2) is formed in one piece with it and of the same material.

3. Sealing arrangement according to Claim 1, **characterized in that** the second sealing ring (2) comprises a supporting body (5) of hard and tough material, which is enclosed at least partially by a shell (6) of elastomeric material, and **in that** the connecting device (4) of the second sealing ring (2) is formed in one piece with the shell (6) and of the same material.

4. Sealing arrangement according to one of Claims 1 to 3, **characterized in that** the connecting device (4) of one of the sealing rings (2) is formed by at least one projection (7) in the form of a latching lug and the connecting device (3) of the other sealing ring (1) is formed by an undercut recess (8), and **in that** the projection (7) and the recess (8) can be snap-fitted one into the other.

5. Sealing arrangement according to one of Claims 1 to 4, **characterized in that** the first sealing ring (1) and the second sealing ring (2) are connected to each other in a nondestructively releasable manner.

6. Sealing arrangement according to one of Claims 1 to 5, **characterized in that** the first sealing ring (1) and the second sealing ring (2) are connected to each other by the connecting devices (3, 4) in a non-positively and/or positively engaging manner.

7. Sealing arrangement according to one of Claims 1 to 6, **characterized in that** the first sealing ring (1) and the second sealing ring (2) form a unit (9) that can be preassembled.

8. Sealing arrangement according to one of Claims 1 to 7, **characterized in that** the sealing lips (10, 11) of the sealing rings (1, 2) are respectively made to protrude counter to the adjacent sealing ring (2, 1) in the axial direction, axially in the direction of the space (17, 18) respectively to be sealed off.

9. Sealing arrangement according to one of Claims 1 to 8, **characterized in that** the first sealing ring (1) has on the side radially facing away from its sealing lip (10) a radially open groove (19) for receiving a separately produced, statically loaded seal (20).

10. Sealing arrangement according to one of Claims 1 to 9, **characterized in that** the first sealing ring (1) consists substantially of PTFE.

## Revendications

1. Dispositif d'étanchéité, comprenant un premier (1) et un deuxième (2) anneaux d'étanchéité, qui sont associés à proximité axiale l'un de l'autre et qui sont assemblés l'un à l'autre de manière imperdable, au moins le premier anneau d'étanchéité (1) étant autoporteur, c'est-à-dire qu'il est réalisé sans corps de support et qu'il se compose d'un matériau polymère, les deux anneaux d'étanchéité (1, 2) présentant chacun un dispositif d'assemblage (3, 4) sur les côtés tournés l'un vers l'autre et le dispositif d'assemblage (3) du premier anneau d'étanchéité (1) étant réalisé en une seule pièce et en une seule matière avec celui-ci, le premier (1) et le deuxième (2) anneaux d'étanchéité présentant respectivement au moins une lèvre d'étanchéité (10, 11) sollicitée dynamiquement en fonctionnement, les lèvres d'étanchéité (10, 11) étant disposées à proximité l'une de l'autre avec une distance axiale et les lèvres d'étanchéité (10, 11) pouvant être appliquées hermétiquement avec une précontrainte radiale sur la surface (12) d'un élément de machine (13) à rendre étanche et délimitant un espace creux (14) en direction axiale, **caractérisé en ce qu'**au moins un des anneaux d'étanchéité (2) présente, dans la région située axialement entre les lèvres d'étanchéité (10, 11), au moins un évidemment (15) qui forme un composant du dispositif d'assemblage (4), qui relie l'espace creux (14) avec l'atmosphère (16) pour l'évacuation de fuites.

2. Dispositif d'étanchéité selon la revendication 1, **caractérisé en ce que** le deuxième anneau d'étanchéité (2) se compose entièrement d'un matériau élastomère et **en ce que** le dispositif d'assemblage (4) du deuxième anneau d'étanchéité (2) est réalisé en une seule pièce et en une seule matière avec celui-ci.

3. Dispositif d'étanchéité selon la revendication 1, **caractérisé en ce que** le deuxième anneau d'étanchéité (2) comprend un corps de support (5) en un matériau ductile dur, qui est entouré au moins en partie par une enveloppe (6) en un matériau élastomère et **en ce que** le dispositif d'assemblage (4) du deuxième anneau d'étanchéité (2) est réalisé en une seule pièce et en une seule matière avec l'enveloppe (6).

4. Dispositif d'étanchéité selon l'une quelconque des revendications 1 à 3, **caractérisé en ce que** le dispositif d'assemblage (4) d'un des anneaux d'étanchéité (2) est formé par au moins une saillie (7) en forme d'ergot d'encliquetage et le dispositif d'assemblage (3) de l'autre anneau d'étanchéité (1) est formé par un évidement en contre-dépouille (8), et **en ce que** la saillie (7) et l'évidement (8) peuvent être encliquetés l'un dans l'autre.

5. Dispositif d'étanchéité selon l'une quelconque des revendications 1 à 4, **caractérisé en ce que** le premier (1) et le deuxième (2) anneaux d'étanchéité sont assemblés l'un à l'autre de façon séparable sans dommages.

6. Dispositif d'étanchéité selon l'une quelconque des revendications 1 à 5, **caractérisé en ce que** le premier anneau d'étanchéité (1) et le deuxième anneau d'étanchéité (2) sont assemblés l'un à l'autre, en continuité de force et/ou de forme, par les dispositifs d'assemblage (3, 4).

7. Dispositif d'étanchéité selon l'une quelconque des revendications 1 à 6, **caractérisé en ce que** le premier (1) et le deuxième (2) anneaux d'étanchéité forment une unité (9) pouvant être préassemblée.

8. Dispositif d'étanchéité selon l'une quelconque des revendications 1 à 7, **caractérisé en ce que** les lèvres d'étanchéité (10, 11) des anneaux d'étanchéité (1, 2) sont précintrées axialement en direction de chaque espace à rendre étanche (17, 18), chaque fois en direction axiale opposée à l'anneau d'étanchéité voisin (2, 1).

9. Dispositif d'étanchéité selon l'une quelconque des revendications 1 à 8, **caractérisé en ce que** le premier anneau d'étanchéité (1) présente, sur le côté radialement opposé à sa lèvre d'étanchéité (10), une rainure ouverte radialement (19), destinée à recevoir un joint d'étanchéité (20) produit séparément, sollicité statiquement.

10. Dispositif d'étanchéité selon l'une quelconque des revendications 1 à 9, **caractérisé en ce que** le premier anneau d'étanchéité (1) se compose essentiellement de PTFE.
